# EUROPÄISCHE PATENTSCHRIFT

(11) **EP 0 603 644 B1**
(45) Veröffentlichungstag und Bekanntmachung des Hinweises auf die Patenterteilung: **09.10.1996**
(21) Anmeldenummer: 93119752.9
(22) Anmeldetag: 08.12.1993
(51) Int. Cl.: F16D 66/02, F16D 66/00, B66B 5/00, B66D 5/30

(54) **Bremsüberwachung für Aufzugsbremsen**
Brake monitoring for elevator brakes
Surveillance des freins pour ascenseurs

(30) Priorität: 21.12.1992 US 993683
(43) Veröffentlichungstag der Anmeldung: 29.06.1994
(73) Patentinhaber: INVENTIO AG, CH-6052 Hergiswil NW (CH)
(72) Erfinder: Lamb, Miles P., Chester, NJ 07930 (US); Martin, Matthew, Randolph, New Jersey 07869 (US)

(56) Entgegenhaltungen:
- EP-A- 0 002 376
- EP-A- 0 145 324
- EP-A- 0 174 746
- EP-A- 0 337 919
- EP-A- 0 502 282
- DE-A- 3 007 887
- US-A- 3 454 925

## Beschreibung

Die Erfindung betrifft eine Aufzugsbremse mit mindestens einem rotierenden Teil, der von anpressbaren Teilen mit Bremsbelägen gebremst oder gehalten wird, wobei die anpressbaren Teile von einer Mechanik getragen werden, die ihrerseits im Brems- oder Haltefall von einer Betätigungseinrichtung derart bewegt wird, dass die anpressbaren Teile mit einer Brems- oder Haltekraft auf den rotierenden Teil einwirken, wobei je anpressbarer Teil mindestens ein Sensor vorgesehen ist, der in einen Träger eingebettet ist, der in den anpressbaren Teil eingelassen ist und bis in den Bereich des Bremsbelages reicht und der Sensor mindestens einen Zustand der Betriebsfähigkeit des anpressbaren Teiles überwacht.

Aus EP-A1 0 002 376 ist eine Bremsüberwachung bekannt, bei der die Spannung gegen Masse über einem Spannungsteiler von einer Auswerteschaltung überwacht wird. Die Verbindung der den Spannungsteiler bildenden Widerstände wird über eine in den Bremsbelag reichende Schlaufe geführt. Der vom Bremsbelag zu bremsende Teil ist elektrisch leitend mit der Masse verbunden. Bei einer minimalen Belagsdicke wird die Schlaufe über den zu bremsenden Teil an Masse gelegt, was eine Spannungsänderung über dem Spannungsteiler hervorruft, die von der Auswerteschaltung in ein Alarmsignal umgesetzt wird.

Ein Nachteil der bekannten Einrichtung liegt darin, dass der zu bremsende, rotierende Teil mittels Schleifringen an Masse gelegt werden muss, was insbesondere bei kleinen Spannungen zu Kontaktproblemen führen kann, was nicht in jedem Falle eine mit dem wirklichen Zustand des Bremsbelages übereinstimmende Spannung über dem Spannugsteiler ergibt. Dadurch ist nicht in jedem Falle gewährleistet, dass ein verbrauchter Bremsbelag durch die Bremsüberwachung alarmiert wird.

Aus EP 0 145 324 ist ein Überwachungselement zur Überwachung von Bremsen bekannt geworden, das einen Widerstand und eine in einem Schutzzylinder aus Isoliermaterial angeordnete U-förmige Schlaufe aufweist. Anschlussstifte sind in einen keramischen Träger eingelassen und mit der Schlaufe des Schutzzylinders verbunden. Zwischen den Stiften liegt ein ohmscher Widerstand, der parallel zur Schlaufe geschaltet ist. Im Normalfall besteht zwischen den Stiften ein durch die Schlaufe verursachter Kurzschluss. Bei fortschreitender Abnutzung der Bremse wird die Schlaufe unterbrochen, was zwischen den Stiften eine Widerstandsänderung von Null auf den Widerstandswert des Widerstandes bewirkt.

Nachteilig bei dieser Einrichtung ist, dass im Normalfall keine Möglichkeit zur Kontrolle des Widerstandes besteht, da der Widerstand dauernd von der Schlaufe kurzgeschlossen ist. Der zwischen den Stiften angeordnete Widerstand ist übermässigen mechanischen Belastungen ausgesetzt, was zu häufigen Brüchen des Widerstandes führen kann. Die Bremsüberwachung ist damit nicht mehr in jedem Fall gewährleistet.

Übliche Bremsen dienen der Umsetzung von Bewegungsenergie in Wärmeenergie. Aufzugsbremsen sind lediglich als Haltebremsen vorgesehen. Falls diese durch übermässige Bremsvorgänge erhitzt werden, ist deren Halteleistung nicht mehr in jedem Falle gewährleistet. Da derartige Überbeanspruchungen zeitlich zwischen zwei visuellen Inspektionen liegen können, vermag der Kontrolleur die verminderte Leistungsfähigkeit der Aufzugsbremse nicht ohne weiteres festzustellen. Ausserdem ist die Abnutzung der Bremsbeläge stark von der Frequentierung des Aufzuges abhängig, die wiederum zwischen zwei visuellen Inspektionen ändern kann. Abgenutzte oder gar gebrochene Bremsbeläge setzen den Aufzug ausser Betrieb bevor die nächste, periodisch vorgenommene visuelle Kontrolle ansteht.

Ein Nachteil der bekannten Einrichtung liegt darin, dass die Sicherheit der Aufzugspassagiere nicht in jedem Falle gewährleistet ist. Ein weiterer Nachteil liegt darin, dass zusätzliche, notfallmässige Unterhaltseinsätze notwendig werden und dadurch das Verhältnis von Betriebszeit zur Ausfallszeit verschlechtert wird.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und eine Einrichtung zu schaffen, mit der die Funktionstüchtigkeit von Aufzugsbremsen automatisch überwacht wird.

Der durch die Erfindung erreichte Vorteil ist im wesentlichen darin zu sehen, dass Zustände der Betriebsfähigkeit wie auch Betriebsstörungen in der Aufzugsbremse ferndiagnostisch erfasst werden können, wodurch die Anzahl der "vor Ort" Einsätze auf ein Minimum beschränkt werden.

Im folgenden wird die Erfindung anhand von lediglich einen Ausführungsweg darstellenden Zeichnungen näher erläutert. Es zeigen:
- Fig. 1: eine schematische Darstellung einer Aufzugsbremse mit einem erfindungsgemässen, multifunktionalen Sensor,
- Fig. 2: einen Ausschnitt aus einer Bremstrommel mit dem in einem Bremsbelag eingebetteten Sensor und
- Fig. 3: ein Prinzipschaltbild einer Schaltungsanordnung zur Umsetzung der vom Sensor erfassten Zustände der Betriebsfähigkeit der Aufzugsbremse in elektrische Signale.

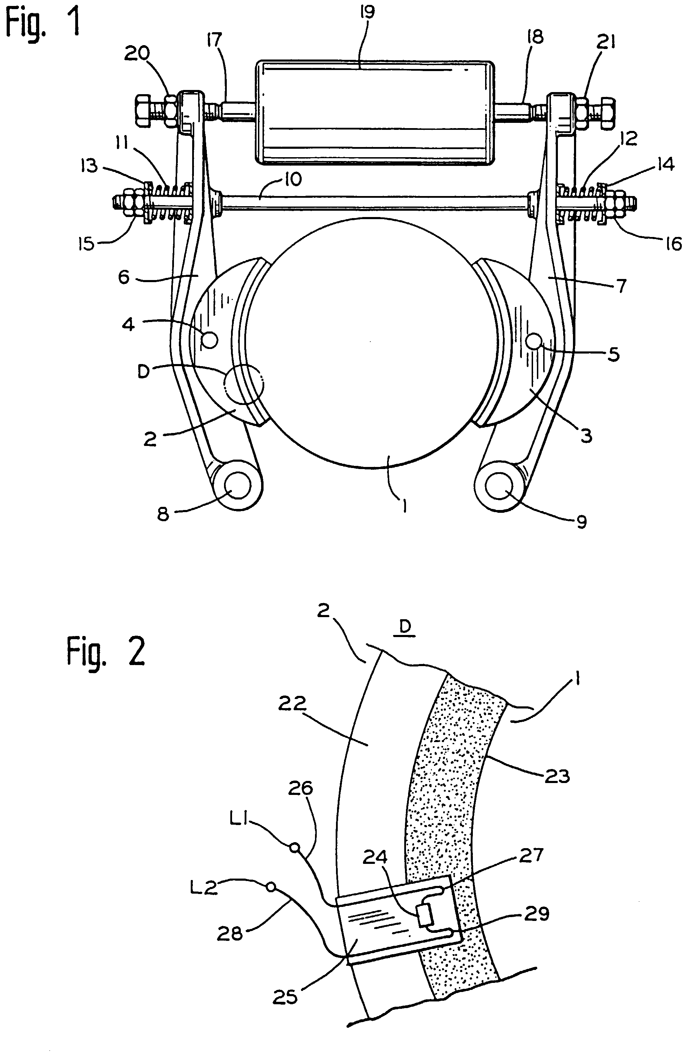

In den Fig. 1 bis 3 ist mit 1 eine mit einer nicht dargestellten Treibscheibe verbundene Bremstrommel bezeichnet, gegen die eine erste Bremsbacke 2 und eine zweite Bremsbacke 3 zur Auflage kommen, die mittels einem ersten Gelenk 4 und einem zweiten Gelenk 5 an einem ersten Bremshebel 6 beziehungsweise an einem zweiten Bremshebel 7 drehbar gelagert sind. Der erste Bremshebel 6 ist an einer ersten Schwenkachse 8 und der zweite Bremshebel 7 an einer zweiten Schwenkachse 9 angeordnet. Ausserdem ist eine Zugstange 10 vorgesehen, die den ersten Bremshebel 6 und den zweiten Bremshebel 7 quer durchsetzt, wobei am einen Ende der Zugstange 10 eine erste Druckfeder 11 und am anderen Ende der Zugstange 10 eine zweite Druckfeder 12 angeordnet sind. Die erste Druckfeder 11 stützt sich einenends gegen einen ersten Endanschlag 13 der Zugstange 10 und anderenends gegen den ersten Bremshebel 6 ab. Die zweite Druckfeder 12 stützt sich einenends gegen einen zweiten Endanschlag 14 der Zugstange 10 und anderenends gegen den zweiten Bremshebel 7 ab. Der erste Endanschlag 13 ist mittels einer ersten Einstellschraube 15, der zweite Endanschlag 14 mittels einer zweiten Einstellschraube 16 verschiebbar, wodurch die Bremsbacken 2;3 mehr oder weniger gegen die Bremstrommel 1 gepresst werden. Ein erster Betätigungsbolzen 17 durchdringt das freie Ende des ersten Bremshebels 6 und ein zweiter Betätigungsbolzen 18 durchdringt das freie Ende des zweiten Bremshebels 7. Beide Betätigungsbolzen 17;18 werden von einer von einem Magneten 19 ausgehenden der Federkraft der Druckfedern 11;12 entgegenwirkenden Kraft beaufschlagt, so dass die Bremsbacken 2;3 von der Bremstrommel 1 abgehoben werden. Eine dritte Einstellschraube 20 und eine vierte Einstellschraube 21 bieten die Möglichkeit, den Abstand der Bremsbacken 2;3 von der Bremstrommel 1 zu verändern.

In Fig. 2 ist ein mit D bezeichneter Ausschnitt aus der in Fig. 1 dargestellten Bremseinrichtung näher erläutert. Die mit der zweiten Bremsbacke 3 identische erste Bremsbacke 2 weist bremstrommelseitig einen Halter 22 auf, an dem ein Bremsbelag 23 angeordnet ist, der beim Bremsen gegen die Bremstrommel 1 gepresst wird. Ein mit 24 bezeichneter Sensor ist in einen aus beispielsweise handelsüblichem Harz bestehenden Träger 25 eingebettet, der in den Halter 22 eingelassen ist und bis in den Bremsbelag 23 reicht. Der im Bereich des Bremsbelages 23 in den Träger 25 eingebettete Sensor 24 weist einen ersten Anschlussdraht 26 auf, der im Bereich des Bremsbelages 23 zu einer U-förmigen, gegen die Bremstrommel 1 gerichteten ersten Schlaufe 27 geformt ist und der mit einer ersten Anschlussklemme L1 in Verbindung steht. Gleichermassen weist der Sensor 24 einen zweiten Anschlussdraht 28 auf, der im Bereich des Bremsbelages 23 zu einer U-förmigen, gegen die Bremstrommel 1 gerichteten zweiten Schlaufe 29 geformt ist und der mit einer zweiten Anschlussklemme L2 in Verbindung steht.

Als Sensor 24 ist ein temperaturabhängiger Widerstand vorgesehen, womit ausserhalb einer Toleranzgrenze liegende, durch übermässige Bremsvorgänge verursachte Temperaturen im Bremsbelag 23 elektrisch erfasst werden können. Im Laufe der Zeit nimmt die Dicke des Bremsbelages 23 soweit ab, bis die Bremstrommel 1 beim Bremsen die erste Schlaufe 27 mit der zweiten Schlaufe 29 verbindet, wodurch der Sensor 24 kurzgeschlossen wird, was wiederum elektrisch erfassbar ist. Falls der Bremsbelag 23 bricht, entsteht zwischen der ersten Anschlussklemme L1 und der zweiten Anschlussklemme L2 ein unendlich grosser Widerstand, der ebenfalls elektrisch erfassbar ist.

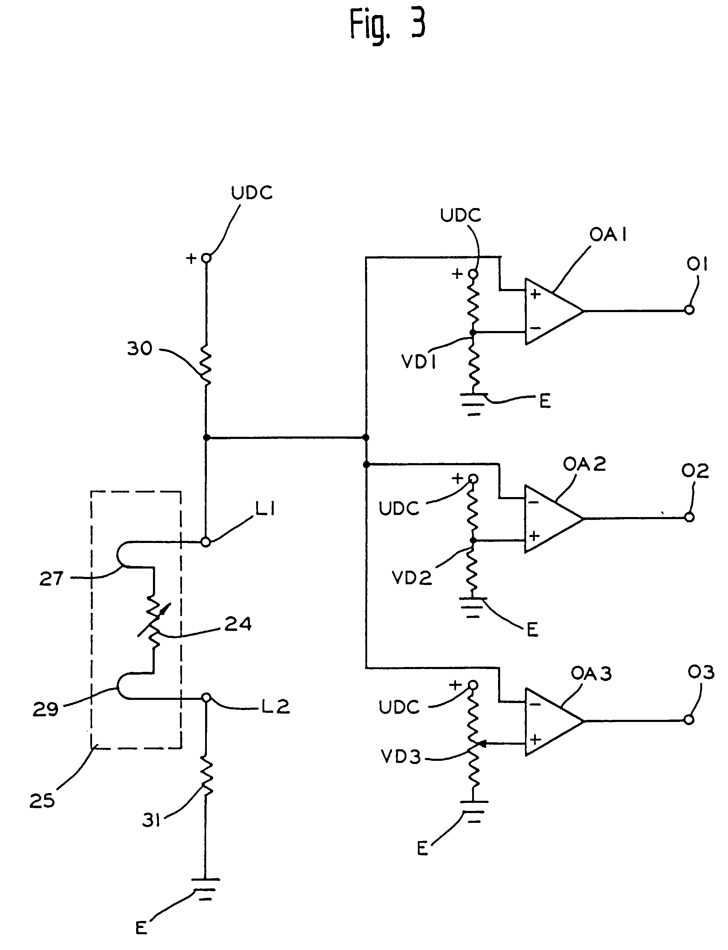

In Fig. 3 ist das Prinzipschaltbild einer Schaltungsanordnung zur Umsetzung der vom Sensor 24 erfassten Zustände der Betriebsfähigkeit der Aufzugsbremse in elektrische Signale dargestellt. Ein erster Widerstand 30 ist einenends an einer + Speisespannung UDC und anderenends an der Anschlussklemme L1 angeschlossen. Ein zweiter Widerstand 31 steht einenends mit der Anschlussklemme L2 und anderenends mit einer Masse E in Verbindung. Erster Widerstand 30, Sensor 24 und zweiter Widerstand 31 liegen somit in Serie und weisen widerstandsmässig gleiche Werte auf. Die erste Anschlussklemme L1 steht zudem mit dem + Eingang eines ersten Verstärkers OA1, mit dem - Eingang eines zweiten Verstärkers OA2 und mit dem - Eingang eines dritten Verstärkers OA3 in Verbindung. Ein fester, erster Spannungsteiler VD1 ist zwischen die + Speisespannung UDC und die Masse E geschaltet und erzeugt eine an den - Eingang des ersten Verstärkers OA1 geführte Referenzspannung von einem Drittel der + Speisespannung UDC. Ein fester, zweiter Spannungsteiler VD2 ist zwischen die + Speisespannung UDC und die Masse E geschaltet und erzeugt eine an den + Eingang des zweiten Verstärkers OA2 geführte Referenzspannung, die etwa ein Volt unterhalb der + Speisepannung UDC liegt. Ein variabler, dritter Spannungsteiler VD3 ist zwischen die + Speisespannung UDC und die Masse E geschaltet und erzeugt eine an den + Eingang des dritten Verstärkers OA3 geführte Referenzspannung, die auf den temperaturabhängigen Arbeitspunkt des Sensors 24 abgestimmt ist. Ein an einem ersten Ausgang O1 des ersten Verstärkers OA1 anstehendes, spannungsmässig hoch liegendes Signal entspricht einem normalen Zustand der Betriebsfähigkeit der Aufzugsbremse. Ein am ersten Ausgang O1 des ersten Verstärkers OA1 anstehendes, spannungsmässig tief liegendes Signal entspricht einer minimalen Dicke des Bremsbelages 23. Ein an einem zweiten Ausgang O2 des zweiten Verstärkers OA2 anstehendes, spannungsmässig hoch liegendes Signal entspricht einem normalen Zustand der Betriebsfähigkeit der Aufzugsbremse. Ein am zweiten Ausgang O2 des zweiten Verstärkers OA2 anstehendes, spannungsmässig tief liegendes Signal entspricht einem gebrochenen Bremsbelag 23. Ein an einem dritten Ausgang O3 des dritten Verstärkers OA3 anstehendes, spannungsmässig hoch liegendes Signal entspricht einem normalen Zustand der Betriebsfähigkeit der Aufzugsbremse. Ein am dritten Ausgang O3 des dritten Verstärkers OA3 anstehendes, spannungsmässig tief liegendes Signal entspricht einer Übertemperatur des Bremsbelages 23. Die Signale des ersten Ausganges O1, des zweiten Ausganges O2 und des dritten Ausganges O3 werden zur weiteren Verarbeitung der Aufzugssteuerung wie auch der Ferndiagnoseeinrichtung zugeführt.

Die oben beschriebene Überwachungseinrichtung eignet sich nicht nur für Aufzugsbremsen mit Bremstrommeln und Bremsbacken, sie kann ebenfalls zur Überwachung von Aufzugsbremsen mit Bremsscheiben und Bremsklötzen verwendet werden.

## Patentansprüche

1. Aufzugsbremse mit mindestens einem rotierenden Teil (1), der von anpressbaren Teilen (2;3) mit Bremsbelägen (23) gebremst oder gehalten wird, wobei die anpressbaren Teile (2:3) von einer Mechanik (6;7;8:9) getragen werden, die ihrerseits im Brems- oder Haltefall von einer Betätigungseinrichtung (10;11;12;17;18;19) derart bewegt wird, dass die anpressbaren Teile (2;3) mit einer Brems- oder Haltekraft auf den rotierenden Teil (1) einwirken, wobei je anpressbarer Teil (2;3) mindestens ein Sensor (24) vorgesehen ist, der in einen Träger (25) eingebettet ist, der in den anpressbaren Teil (2;3) eingelassen ist und bis in den Bereich des Bremsbelages (23) reicht und der Sensor (24) mindestens einen Zustand der Betriebsfähigkeit des anpressbaren Teiles (2;3) überwacht,
dadurch gekennzeichnet,
dass der Sensor (24) einen ersten Anschlussdraht (26) bzw. einen zweiten Anschlussdraht (28) aufweist, der im Bereich des Bremsbelages 23 zu einer U-förmigen, gegen den rotierenden Teil (1) gerichteten ersten bzw. zweiten Schlaufe (27;29) geformt ist und dass der Sensor (24) ein temperaturabhängiger Widerstand ist.

2. Aufzugsbremse nach Anspruch 1,
dadurch gekennzeichnet,
dass der Sensor (24) mit einer Schaltungsanordnung in Verbindung steht, die die Zustände Normal, Minimaler Bremsbelag, Gebrochener Bremsbelag und Übertemperatur Bremsbelag in elektrische Signale umwandelt.

3. Aufzugsbremse nach Anspruch 2,
dadurch gekennzeichnet,
dass die Schaltungsanordnung Verstärker (OA1;OA2;OA3) aufweist, an deren Eingänge je eine dem jeweiligen Zustand der Betriebsfähigkeit entsprechende Referenzspannung und die durch den Sensor (4) bestimmte Istspannung angelegt sind und an deren Ausgänge (O1;O2;O3) die dem jeweiligen Zustand der Betriebsfähigkeit der anpressbaren Teile (2;3) entsprechenden Signale anstehen.

## Claims

1. Lift brake with at least one rotating part (1), which is braked or held by parts (2; 3) which are pressable thereagainst and have brake linings (23), wherein the pressable parts (2; 3) are carried by a mechanical system (6; 7; 8; 9), which in its turn is moved by a actuating equipment (10; 11; 12; 17; 18; 19) in such a manner in the case of braking or holding that the pressable parts (2; 3) act on the rotating part (1) with a braking or holding force, wherein at least one sensor (24) is provided for each pressable part (2, 3) and embedded into a carrier (25), which is let into the pressable part (2; 3) and reaches into the region of the brake lining (23), and the sensor (24) monitors at least one state of the working order of the pressable part (2; 3), characterised thereby, that the sensor (24) comprises a first connecting wire (25) or a second connecting wire (28), which in the region of the brake lining (23) is shaped into a first or a second respective U-shaped loop (27; 29) directed towards the rotating part (1) and that the sensor (24) is a temperature-dependent resistor.

2. Lift brake according to claim 1, characterised thereby, that the sensor (24) stands in connection with a circuit arrangement which converts the states of normal, minimum brake lining, broken brake lining, and excess temperature brake lining into electrical signals.

3. Lift brake according to claim 2, characterised thereby, that the circuit arrangement comprises amplifiers (OA1; OA2; OA3), to the inputs of which a reference voltage corresponding with the respective state of the working order and the actual voltage determined by the sensor (24) are applied and at the outputs (O1; O2; O3) of which the signals corresponding with the respective state of the working order of the pressable parts (2; 3) are present.

## Revendications

1. Frein d'ascenseur comportant au moins un élément rotatif (1) qui est freiné ou arrêté par des éléments aptes à être pressés (2;3) pourvus de garnitures de frein (23), étant précisé que les éléments aptes à être pressés (2;3) sont portés par un mécanisme (6;7;8;9) qui est lui-même déplacé, en cas de freinage ou d'arrêt, par un dispositif d'actionnement (10;11;12;17;18;19) de telle sorte que les éléments aptes à être pressés (2;3) agissent avec une force de freinage ou d'arrêt sur l'élément rotatif (1), et étant précisé qu'on prévoit pour chaque élément apte à être pressé (2;3) au moins un capteur (24) qui est encastré dans une monture (25) introduite dans l'élément apte à être pressé (2;3) et s'étendant jusque dans la zone de la garniture de frein (23), et que le capteur (24) surveille au moins un état de la capacité de fonctionnement de l'élément apte à être pressé (2;3),
caractérisé en ce que le capteur (24) comporte un premier fil de connexion (26) et un second fil de connexion (28) qui ont respectivement, dans la zone de la garniture de frein (23), la forme d'une première et d'une seconde boucle en U (27;29) dirigée vers l'élément rotatif (1), et en ce que le capteur (24) est une résistance variable avec la température.

2. Frein d'ascenseur selon la revendication 1, caractérisé en ce que le capteur (24) est relié à un montage qui convertit en signaux électriques les états : normal, garniture de frein minimum, rupture de garniture de frein et échauffement de la garniture de frein.

3. Frein d'ascenseur selon la revendication 2, caractérisé en ce que le montage comporte des amplificateurs (OA1;OA2;OA3) à l'entrée desquels sont appliquées une tension de référence correspondant à l'état de la capacité de fonctionnement et la tension réelle définie par le capteur (4), et à la sortie (O1;O2;O3) desquels se trouvent les signaux correspondant à l'état de la capacité de fonctionnement des éléments aptes à être pressés (2;3).
